(19) Europäisches Patentamt European Patent Office Office européen des brevets

(11) **EP 1 706 478 B1**

(12) **FASCICULE DE BREVET EUROPEEN**

(45) Date de publication et mention de la délivrance du brevet:
**24.12.2008 Bulletin 2008/52**

(21) Numéro de dépôt: **05717446.8**

(22) Date de dépôt: **19.01.2005**

(51) Int Cl.:
*C12G 1/022* (2006.01)   *C12H 1/14* (2006.01)

(86) Numéro de dépôt international:
**PCT/FR2005/000115**

(87) Numéro de publication internationale:
**WO 2005/080543 (01.09.2005 Gazette 2005/35)**

(54) **PROCEDE DE PREVENTION DU VIEILLISSEMENT DEFECTUEUX DES VINS BLANCS**

VERFAHREN ZUR VERHINDERUNG EINER GESTÖRTEN ALTERUNG VON WEISSWEINEN

METHOD FOR PREVENTING DEFECTIVE AGEING OF WHITE WINES

(84) Etats contractants désignés:
**AT BE BG CH CY CZ DE DK EE ES FI FR GB GR HU IE IS IT LI LT LU MC NL PL PT RO SE SI SK TR**

(30) Priorité: **20.01.2004  FR 0400464**

(43) Date de publication de la demande:
**04.10.2006  Bulletin 2006/40**

(73) Titulaire: **Lallemand SAS
31700 Blagnac (FR)**

(72) Inventeur: **ORTIZ-JULIEN, Anne
F-31150 Gagnac-sur-Garonne (FR)**

(74) Mandataire: **Peaucelle, Chantal
Cabinet Armengaud Aîné
3, Avenue Bugeaud
75116 Paris (FR)**

(56) Documents cités:
**WO-A-91/05846**

• **DATABASE WPI Section Ch, Week 199437 Derwent Publications Ltd., London, GB; Class D16, AN 1992-012691 XP002284003 -& JP 06 075500 B (OZEKI SAKE BREWING) 28 septembre 1994 (1994-09-28)**
• **JIN-CHUL PARK ET AL.: "Isolation and identification of the high-glutathione producing Saccharomyces cerevisiae FF-8 from Korean traditional Rice Wine and optimal producing conditions" JOURNAL OF THE KOREAN SOCIETY OF AGRICULTURAL CHEMISTRY AND IOTECHNOLOGY, vol. 46, no. 4, 2003, pages 348-352, XP008031614 KR**
• **ROUSSIS ET AL.: "Inhibition of oxidative browning in white wines by hohocysteine" WEIN-WISSENSCHAFT, vol. 55, no. 1, 2000, pages 29-32, XP002284748 DE**

**Description**

La présente invention concerne le domaine de la production et de la conservation des vins, en particulier celle des vins blancs.

Elle a pour objet un procédé de préparation d'un vin permettant de prévenir les problèmes de vieillissement défectueux grâce à l'introduction de levure enrichie en glutathion dans le moût avant la mise en bouteille. La présente invention a également pour objet un moût enrichi en glutathion par l'introduction de levure enrichie, ainsi que le vin ainsi obtenu.

Les problèmes associés au vieillissement des vins blancs sont bien connus des viticulteurs. Ils se manifestent par une perte des arômes variétaux, un profil organoleptique modifié et une coloration brune des vins. Des phénomènes d'oxydation sont à mettre en relation avec ces évolutions aromatiques et chromatiques.

En particulier, on attribue le brunissement des vins blancs à des polymérisations oxydatives de certains polyphénols. Ceux-ci, en réagissant avec l'oxygène, produisent des quinones et des semi-quinones. Ces composés se complexent avec les thiols volatils pour former des pigments bruns. Les propriétés aromatiques des thiols volatils, une fois ceux-ci complexés, ne peuvent plus s'exprimer.

Or les vins blancs sont élaborés avec l'objectif d'obtenir des vins fi-uités, frais, à consommer assez rapidement, ou bien des vins dits "premiums" vieillis pendant plusieurs années. Dans les deux cas, il est essentiel de protéger les vins de l'oxydation et du brunissement qui peuvent détériorer le profil organoleptique de ces vins blancs. En effet, la détérioration des arômes et le brunissement représentent un manque à gagner important en termes économiques.

Plusieurs solutions ont été envisagées pour prévenir ce brunissement et les déviations organoleptiques qui y sont associées:

1. limiter l'exposition à l'oxygène
2. utiliser des anti-oxydants chimiques tels que $SO_2$,
3. éliminer les polyphénols responsables du brunissement.

Compte tenu du fait qu'il faut éviter tout contact du produit avec l'oxygène pendant son élaboration, l'exposition à l'oxygène est déjà extrêmement réduite. Une limitation encore plus stricte demanderait des efforts considérables, difficilement réalisables dans la pratique et disproportionnés avec le gain possible.

La deuxième solution repose sur l'utilisation du $SO_2$ comme anti-oxydant. L'addition de $SO_2$ dans les moûts durant la fermentation alcoolique a été largement pratiquée mais est aujourd'hui de plus en plus limitée puisque les viticulteurs évitent d'y recourir pour des raisons liées à la qualité des produits, mais aussi du fait des interférences avec la fermentation malolactique.

Pour éliminer les polyphénols afin de corriger le brunissement des vins blancs, des agents de collage sont communément employés, comme le charcoal activé ou la PVPP (Fialdes, E. , Rev. des OEnologues, 1989, 54, 19-22; Baron, R. et al., Z. Lebensm. Unters Forsch, 1997, 205, 474-78). Cependant, ces substances présentent l'inconvénient d'altérer les flaveurs et les arômes des vins (Sims, C.A., et al., Am. J. Enol. Vitic; 1995, 46(2), 155-158). En outre, certains polyphénols tels que le resvératrol, ayant des propriétés très intéressantes d'un point de vue alimentaire et sur la santé, leur élimination ne se justifie pas.

Ainsi, aucune des pratiques actuelles ne permet de s'affranchir de manière satisfaisante du problème de la détérioration des arômes et du brunissement des vins blancs lors du vieillissement.

Pour remédier aux inconvénients exposés, il a été suggéré de traiter le vin par de la levure de boulangerie (Bonilla et al., J. Agric. Food Chem., 2001, 49, 1928-1933). En effet, les membranes des levures ont la propriété de retenir certains composés, et notamment des substances colorantes telles que les anthocyanines. Les vins ont été traités par des doses de levure allant de 0,5 g/l à 5 g/l durant 24 heures, puis ont été filtrés. Un effet sur la coloration a été observé, tandis que les propriétés gustatives étaient préservées. Cette technique appartenant aux "technologies vertes" a cependant l'inconvénient de nécessiter une stérilisation microbiologique pour garantir que toutes les cellules de levure soient extraites avant qu'elles puissent se multiplier et altérer la transparence ainsi que les propriétés organoleptiques du vin.

Une autre étude s'est inspirée de l'observation selon laquelle l'altération de l'arôme et de la couleur des jus de fruits pouvait être corrigée par l'addition de peptides ou d'acides aminés soufrés (Molnar-Perl *et al.,* 1990). Par analogie, il a été suggéré que le brunissement et la détérioration des arômes des vins blanc pouvaient être liés à la présence plus ou moins importante de composés soufrés, tels que le glutathion (Dubourdieu etal., 2003, 7ème Symposium International d'nologie, Bordeaux,http//vinideanet.com). Dans un premier temps, la présence dans les moûts de glutathion dans sa forme réduite a été mise en évidence.

Sa concentration est fonction de la teneur en azote, et varie selon l'avancement de la fermentation entre quelques milligrammes et une vingtaine de milligrammes par litre. Il a aussi été montré que l'addition à l'embouteillage de 10mg/l de glutathion à un vin blanc, limite le jaunissement de sa couleur, l'érosion de son arôme et sa tendance au vieillissement défectueux. Ces résultats ne sont cependant pas susceptibles d'être transposés dans la pratique des viticulteurs, car l'ajout de glutathion sur vin uni n'est pas autorisé dans les pratiques oenologiques. Par ailleurs, l'introduction de glutathion dans le moût n'est pas envisageable, car on sait que le glutathion constituant une source d'azote, il est susceptible d'être consommé durant la fermentation alcoolique par les levures actives inoculées.

Ainsi, si ces études présentent un intérêt pour la compréhension des phénomènes en jeu dans la détérioration des arômes et le brunissement des vins blancs, aucune solution technique n'est proposée pour permettre de s'affranchir en pratique de ces problèmes.

Roussis et al. décrivent l'inhibition du brouissage seydatif des vins blancs par l'homocystéine (Vitic. Enol. Sci. 55(1), 29-32 (2000), XP 002284748).

La demande JP 06 075500 décrit un procédé de production d'un vin de riz, à l'aide d'une levure dépourvue de vacuole obtenue par croisement avec une levure de bière, afin de libérer dans le milieu des actifs tel que le glutathion, qui sont ordinairement emmagasinés dans la cellule.

L'article de Park et al dans le Journal of the Korean Society of Agricultural Chemistry and Iotechnology, vol ; 46, 2003, p.348-352, décrit des souches de levure à forte teneur en glutathion intracellulaire qui ont été isolées à partir de vins de riz traditionnels, en vue d'une production de glutathion sur milieu liquide en fermenteur.

WO 91/05846 (D3) décrit un procédé de préparation d'un vin résistant au brunissement faisant appel à l'ajout dans le moût de substances contenant de l'amidon à la place de soufre.

La demande US 2003190388 de Morris RA décrit un procédé pour accélérer la préparation de vin en utilisant en combinaison divers ingrédients dont des quantités de levures pouvant aller de 0,5g/23 litres à 1,5g/23 litres.

De manière surprenante et inattendue, il a été trouvé qu'un apport de levure enrichie en glutathion dans le moût permettait d'obtenir des vins blancs frais, plus fruités, aux arômes complexes, et que lors du vieillissement de ces vins, la fraîcheur de ces arômes était préservée, et le brunissement évité. Cette levure peut être introduite à tout moment, du début de la fermentation alcoolique jusqu'à la mise en bouteille, avec le même effet bénéfique.

Concernant les mécanismes d'action, l'hypothèse peut être faite que les cellules de levure jouent un rôle protecteur du glutathion pendant la fermentation alcoolique puis le libère pendant les phases post-fermentaires. Le glutathion pourrait réagir lors de l'élevage ou après la mise en bouteille, avec les quinones pour former un complexe incolore, empêchant alors ces mêmes quinones de réagir avec les thiols volatils (molécules aromatiques), ce qui provoque habituellement un complexe brun, et qui empêche l'expression aromatique.

Cependant ce résultat est particulièrement surprenant puisque les levures contiennent naturellement une certaine quantité de glutathion, à hauteur de 0,2% à 0,5 %, soit 0,2 g à 0,5 g de glutathion pour 100 g de matière sèche de levure. Or, il n'a jamais été relevé que l'inoculation des levures destinées à initier la fermentation alcoolique produise quelque effet que ce soit sur le vieillissement défectueux des vins blancs.

La présente invention présente de nombreux avantages pour les professionnels. Grâce au procédé revendiqué, il est en effet possible d'obtenir, en utilisant uniquement des ingrédients naturels, des vins blancs de qualité, répondant aux critères suivants:

- rondeur du vin
- fraîcheur et fruité,
- stabilité dans le temps de arômes
- stabilité dans le temps de la couleur.
Aucun ajout de substances étrangères tels que des anti-oxydants chimiques n'est requis, aucune manipulation complexe n'est nécessaire.
Le procédé selon l'invention présente également des avantages pour les consommateurs. En effet, le glutathion, tripeptide composé de glutamate-cystéine-glycine est de plus en plus étudié dans le domaine de la médecine, où il est décrit comme le "maître anti-oxydant". Le glutathion, de par son acide aminé soufré (la cystéine), est considéré comme jouant un rôle important pour détoxifier les cellules et renforcer le système immunitaire. Or, la cystéine étant rare dans l'alimentation humaine, le glutathion n'est synthétisé qu'en petites quantités. Un apport direct de glutathion par voie alimentaire pourrait donc avoir un effet bénéfique sur la santé.
De manière plus précise, la présente invention a pour objet un procédé pour la prévention du vieillissement défectueux des vins blancs, dans lequel lors de la préparation dudit vin selon les méthodes communément mises en oeuvre par les professionnels, on introduit dans le moût de la levure préalablement enrichie en glutathion au début, pendant ou après l'étape de fermentation alcoolique. L'expression "levure enrichie" désignera expressément une levure enrichie en glutathion. Par glutathion on entend la molécule composée des trois acides aminés glutamate-cystéine-glycine, sous sa forme oxydée ou réduite.
La production de levure enrichie en glutathion est bien connue le l'homme du métier qui sait la préparer par une des techniques à sa disposition. Voir par exemple Catalino et al., 1992, Applied Microbiology and Biotechnology, Ed Springer-Verlag, pp.141-146. Jusqu'à présent les levures enrichies en glutathion ont été utilisées en boulangerie pour renforcer le gluten dans les pâtes à pain et améliorer l'élasticité de la pâte.

La levure enrichie peut être introduite dans le moût à n'importe quel moment avant la mise en bouteilles du vin, au début de la fermentation alcoolique, dans le courant de celle-ci, ou même lorsque celle-ci est terminée, par exemple durant d'élevage en barrique le cas échéant. Pour des raisons de simple commodité, il est recommandé de l'introduire en début de fermentation.

Par moût, on entend un jus de fruit, un jus de fruit en cours de fermentation ou dans lequel la fermentation alcoolique est terminée, jusqu'à l'obtention d'un vin fini, éventuellement après élevage en barrique. Lorsque le vin est fini, il est filtré pour mise en bouteille. À ce stade, pour des raisons pratiques évidentes, il devient difficile d'envisager un apport de levures enrichies.

La levure est choisie de préférence parmi les levures habituellement employées en oenologie, par exemple *Saccharomyces cerevisiae* et non-*Saccharomyces* ayant un intérêt oenologique. De manière avantageuse on peut utiliser comme levure enrichie en glutathion la même espèce, voire la même souche, que celle employée pour réaliser la fermentation alcoolique.

Dans le procédé selon l'invention, ladite levure enrichie en glutathion contient plus de 0,5% de glutathion en poids rapporté au poids de matière sèche de la levure. De manière avantageuse, ladite levure enrichie en glutathion contient au moins 1 % de glutathion, et de préférence au moins 1,5% de glutathion, en poids rapporté au poids de matière sèche de la levure. Par exemple, pour une efficacité optimum, on utilise une levure enrichie à 1,8% de glutathion.

Selon un mode de réalisation avantageux du procédé selon l'invention, on ajoute ladite levure enrichie en glutathion dans le moût à raison de 0,1 g à 1 g de matière sèche par litre de moût, de préférence 0,3 g/l à 0,7 g/l, et encore de préférence à raison de 0,5 g/l.

Le dosage de la quantité de levure enrichie introduite dans le moût peut être modulée selon différents paramètres, tels que le taux d'enrichissement en glutathion des levures ou l'amplitude de l'effet recherché. Finalement, l'homme du métier pourra déterminer la dose de levure à introduire, en fonction de la quantité de glutathion qu'il souhaite apporter. Ainsi, selon une caractéristique avantageuse du procédé selon l'invention, l'introduction dans le moût de la levure enrichie en glutathion réalise un apport d'au moins 3 mg de glutathion par litre de moût, de préférence au moins 5 mg, la limite supérieure pouvant atteindre 100 mg/l bien que l'apport des quantités correspondantes de levure soient économiquement inacceptable. Selon un mode de réalisation particulièrement préféré, la levure enrichie en glutathion réalise un apport d'environ 9 mg de glutathion par litre de moût, ces quantités étant entendues en plus des quantités habituellement apportées par les levures fermentaires.

Comme indiqué précédemment, la levure enrichie peut être introduite dans le moût à n'importe quel moment avant la mise en bouteilles du vin, au début de la fermentation alcoolique, dans le courant de celle-ci, ou même lorsque celle-ci est terminée. Dans certains cas, il est néanmoins recommandé d'attendre quelques heures après l'inoculation des levures fermentaires pour ne pas gêner le démarrage de la fermentation alcoolique en interférant sur la multiplication et l'implantation de la souche sélectionnée.

Par ailleurs, la levure enrichie peut être introduite dans le moût sous de forme de levure sèche inactive, mais également sous forme de levure sèche active. Rien ne s'oppose en effet à ce que le producteur de vin réalise plusieurs introductions de levure enrichie, prises sous des formes différentes. Il peut par exemple introduire une levure active enrichie en même temps qu'il ensemence le moût avec les levures fermentaires, puis ajouter une seconde quantité de levure enrichie au cours de la fermentation, par exemple sous forme inactive.

Finalement, selon le procédé revendiqué, la levure enrichie en glutathion peut être introduite dans le moût sous une ou plusieurs des formes suivantes: levure active, levure inactive, sèche ou liquide.

En général, la levure enrichie est introduite en supplément de la levure inoculée pour initier la fermentation alcoolique. Cependant, il est tout à fait possible, et même intéressant que la levure fermentaire soit elle-même enrichie en glutathion. Un seul ensemencement de levure est alors réalisé avant la fermentation alcoolique. Si nécessaire, un apport complémentaire de levure enrichie peut être fait, immédiatement ou ultérieurement durant le fermentation ou l'élevage.

Par exemple, pour initier la fermentation, on ensemence le moût avec 0,25 g/l de levure fermentaire enrichie à 1,8 %, puis lorsque la phase de multiplication des levures actives est terminée et que la fermentation démarre, on apporte 0,25 g/l de levure sèche inactive enrichie à 1,8%. Dans ce cas, l'apport total en levures enrichies est de 0,5 g/l de moût. L'apport total en glutathion est de 9 mg/l soit à 1,25 mg/l apporté habituellement par la levure active auxquels s'ajoutent 7,75 mg/l apportés en supplément.

Ainsi, selon un mode de réalisation particulier du procédé selon l'invention, la levure enrichie en glutathion est au moins en partie constituée par la levure inoculée dans le moût pour réaliser la fermentation alcoolique.

Conformément au procédé de préparation d'un vin selon l'invention, le moût possède des caractéristiques particulières, qui conféreront au vin finalement obtenu les propriétés de bonne conservation décrites précédemment, imputables à la présence de levure enrichie en glutathion. Un autre objet de la présente invention est donc un moût, tel qu'un moût de raisin

dans lequel se produit (ou s'est produit) une fermentation alcoolique, comprenant des levures enrichies en glutathion. Ces levures sont par exemple des *Saccharomyces cerevisiae* et des non-*Saccharomyces* ayant un intérêt oenologique.

En particulier le moût selon l'invention comprend des levures enrichies à plus de 0,5% en glutathion. De préférence lesdites levures contiennent au moins 1%, et de préférence au moins 1,5% de glutathion, en poids rapporté au poids de matière sèche de la levure. Il n'y a aucun inconvénient à introduire dans le moût des levures encore plus riches en glutathion, dans la mesure où le paramètre déterminant semble être la quantité de glutathion apportée. La quantité de levure introduite pourra donc être modulée en fonction du taux d'enrichissement en glutathion et de l'apport total de glutathion souhaité.

Selon une caractéristique avantageuse, le moût selon l'invention comprend une quantité de levures enrichies en glutathion correspondant à une teneur d'au moins 3 mg de glutathion par litre de moût, de préférence au moins 5 mg. De manière optimale le moût comprend environ 9 mg de glutathion par litre de moût. Des quantités supérieures peuvent également être mises en oeuvre sans inconvénient particulier, si ce n'est que le résultats obtenu sur le vieillissement ne sera pas notablement amélioré, et les coûts accrus.

On aura compris que le procédé ci-dessus décrit est essentiellement destiné à la préparation des vins blancs, ceux-ci étant particulièrement affectés par les problèmes de vieillissement défectueux. Il sera tout particulièrement appliqué à la prévention du brunissement des vins blancs après la mise en bouteille.

Sont également objets de la présente invention les vins préparés par un procédé selon l'invention ou encore les vins obtenus à partir d'un moût tel que revendiqué.

Les exemples qui suivent décrivent en détail différents aspects de la présente invention et illustrent les avantages du procédé de préparation d'un vin pour la prévention d'un vieillissement défectueux.

**EXEMPLE 1**

**Méthode de dosage du glutathion dans la levure**

La levure enrichie est caractérisée par le dosage de sa teneur en glutathion selon la méthode ci-dessous.

1. Principe

L'acide 5,5'-dithiobis 2-nitrobenzoïque (DTNB) réagit à pH 8 avec les groupes SH, pour donner une mole d'anion de couleur jaune à partir d'une mole de composé comprenant un groupe SH. La concentration peut être déterminée par mesure de la couleur jaune à l'aide d'un spectrophotomètre à 412 nm.

2. Appareillage

* Spectrophotomètre
* Agitateur-mélangeur
* Centrifugeuse (10000 G)
* Pipettes P100, P1000, P 5000

3. Réactifs

* 0.1 N NaOH: 0,4 g de NaOH dilué dans 100 ml d'eau distillée
* HCl 0,1 N
* Tampon TE8 (50 mM de tris, 3 mM d'EDTA, environ 38 mM HCl pH 8,0)

- Dissoudre 6,05 g de Tris + 1,1167g d'EDTA sous forme de sel disodium dihydrate ($C_{10}H_{14}N_2Na_2.O_8$, $2H_2O$) dans 900 ml d'eau distillée.
- Après dissolution, amener le pH à 8,0 avec environ 38 ml de HCL 1N.
- Compléter à 1000 ml avec de l'eau distillée. Conserver à 4 °C.

* Réactif DTNB (acide 5,5'-dithiobis 2-nitrobenzoïque)

- Préparer une solution mère de DTNB, qui pourra être conservée au moins un mois à 4° C à l'obscurité. Dans un tube à essai, mettre en solution 39,6 mg de DTNB + 8 ml de TE8 + 2 mol de NaOH 0,1 N (jusqu'à pH 8,0). Ajouter NaOH en dernier.
- Le jour du dosage, préparer le réactif: diluer 0,8 ml de solution mère de DTNB avec du TE8 jusqu'à obtenir 100 ml.

## 4. Courbe étalon de dosage du glutathion (GSH)

* Préparer des solutions fraîches comme suit

|     |              |                 |          |
|-----|--------------|-----------------|----------|
| S1: | 30,7 mg GSH + | 10ml O,1N HCl   | (10 mM)  |
| S2: | 1,0 ml de S1 + | 4ml 0,1N HCl    | (2 mM)   |
| S3: | 0,5 ml de S1 + | 4.5 ml 0,1N HCl | (1 mM)   |
| S4: | 0,3 ml de S1 + | 4.7 ml 0,1N HCl | (0,6 mM) |
| S5: | 0,2 ml de S1 + | 4,8 ml 0,1N HCl | (0,4 mM) |
| S6: | 0,1 ml de S1 + | 4,9 ml 0,1N HCl | (0,2 nM) |

* Mesurer l'absorbance

- Zéro: 0,1 ml HCl + 4,9 ml de réactif DTNB
- Pour chacune des solutions S2 à S6, introduite 0,1 ml de solution GSH dans 4,9 ml de réactif DTNB. Agiter et mesurer à 412 nm après repos à température ambiante pendant 10 minutes. La totalité des mesures doit être réalisée en moins d'une heure.
- Tracer la courbe d'absorbance en fonction de la concentration de GSH en mM. On obtient une courbe de régression linéaire.

## 5. Mesure du GSH dans les échantillons

* Extraction du GSH des produits de levure sèche

- Ajouter 0,4 g d'échantillon à 10,0 ml de HCl 0,1 N dans un tube de centrifugeuse et agiter pour obtenir une suspension (si la teneur en eau est nettement supérieure à 4%, ajuster la quantité d'échantillon)
- Mélanger régulièrement durant la période de digestion (30 à 60 minutes).
- Centrifuger à 8000 RPM pendant environ 5 minutes (ou plus longtemps si la vitesse de rotation est moindre). Le surnageant doit être transparent à l'oeil nu.

* Dosage du GSH

- Introduire 0,1 ml de surnageant dans 4,9 ml de réactif DTNB
- Agiter et mesurer à 412 nm après repos à température ambiante pendant 10 minutes.
  La totalité des mesures doivent être réalisées en moins d'une heure.
- A partir de la valeur mesurée de l'absorbance, lire sur la courbe étalon la concentration correspondante de GSH présent dans la solution analysée.

* Calcul de la teneur en glutathion dans la levure:

- Pour un produit ayant une teneur en eau de moins de 4%, le calcul est le suivant :

$$\text{mg GSH / g échantillon} = \underset{\text{(lu sur courbe)}}{\text{mM GSH}} \times \frac{307,32 \text{ mg GSH}}{\text{litre solution}} \times \frac{10 \text{ ml solution}}{0,4 \text{ g échantillon}} \times \frac{1 \text{ litre}}{1000 \text{ ml}}$$

ou plus simplement,

$$mg\ GSH\ /\ g\ \text{échantillon} = mM\ GSH\ (lu)\ \times\ 7{,}683$$

- Pour un produit ayant une teneur en eau de plus de 4% et une teneur en matière sèche (%MS), le calcul est le suivant :

$$mg\ GSH\ /\ g\ \text{échant.} = \frac{mM\ GSH}{(lu\ sur\ courbe)}\ \times\ \frac{307{,}32\ mg\ GSH}{litre\ solution}\ \times\ \frac{ml\ solution}{0{,}4\ g\ \text{échant.}}\ \times\ \frac{1\ litre}{1000\ ml}\ \times\ \frac{100\%}{\%MS\ \text{échant.}}$$

NB. Le réactif DTNB n'est pas spécifique de GSH, mais réagit avec tous les groupes SH libres.

**EXEMPLE 2**

**Addition de levure enrichie en glutathion en début de fermentation**

1)- Préparation de levures enrichies en glutathion

Une levure appartenant à l'espèce *Saccharomyces cerevisiae* (Levure de boulangerie 2133®, Lallemand, Canada) est enrichie en différentes teneurs de glutathion par la méthode décrite par C. Alfafara (Alfafara C. et al, Appl. Microbiol. Biotechnol. Ed. Springer-Verlag 1992, pp.141-146). Après traitement, la teneur en glutathion est vérifiées selon le protocole décrit à l'exemple 1.
Les deux levures enrichies, notées SC1 et SC2, contiennent respectivement 1,15% et 1,8% de glutathion, exprimé en poids rapporté au poids de levure sèche. Le levures sont séchées et inactivées selon les méthodes usuelles connues et placées dans un récipient hermétique.

2)- Mise en oeuvre

Trois fermentations alcooliques sont conduites en parallèle sur un moût de Chardonnay dans des fermenteurs de 1,1 litre. Chaque fermenteur est ensemencé par 0,25 g/l de levure sèche active (EC1118®, Lallemand, Canada), réhydratée selon la méthode standard (30 minutes dans de l'eau à 37°C). Cette levure; notée ici SCo, contient naturellement 0,5% de glutathion.
Après avoir contrôlé le démarrage de la fermentation par une technique à la disposition de l'homme du métier (mesure du $CO_2$ dégagé ou mesure de la consommation de sucre), on introduit 0,3 g/l de levure SC1 et SC2 dans les fermenteurs F1 et F2 respectivement. Les quantités de glutathion apportées sont ainsi les suivantes:

- dans les trois fermenteurs: apport de 1,25 mg/l par le biais de la levure fermentaire;
- dans F1 : apport de 3,45 mg/l supplémentaires;
- dans F2 : apport de 5,40 mg/l supplémentaires;

3) - Effet sur la cinétique fermentaire

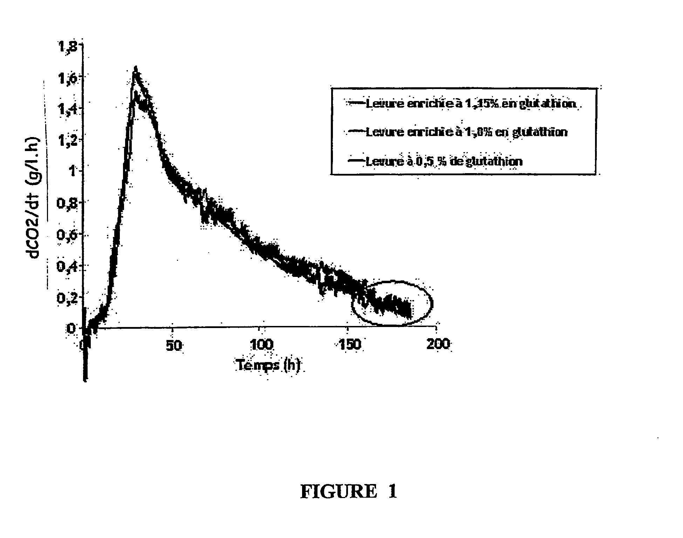

La cinétique fermentaire est suivie dans chaque fermenteur par mesure du $CO_2$ dégagé. Les résultats sont présentés Figure 1. Ils montrent qu'un ajout en début de fermentation alcoolique de levure enrichie en glutathion n'a pas d'effet négatif sur les cinétiques fermentaires, quelle que soit la teneur en glutathion ajouté.
Lorsque la fermentation alcoolique est terminée, les vins Vo, V1 et V2 de chaque fermenteur sont transvasés, filtrés et conservés à 14°C en bouteilles couchées dans un local thermostaté. Après un mois, des tests organoleptiques et des analyses sensorielles sont réalisés sur des échantillons de Vo, V1 et V2.

4) - Effet sur les qualités gustatives du vin

Un jury d'experts composé de 15 personnes a procédé à une dégustation en aveugle. Le tableau 1 ci-dessous exprime les résultats de la dégustation sur les vins avec ajout en début de fermentation alcoolique effectuée par un jury expert.

TABLEAU 1

| échantillon | Vo | V1 | V2 |
|---|---|---|---|
| teneur | 0,5% glutathion | 1,15 % glutathion | 1,8 % glutathion |
| somme des rangs | 17 | 15 | 10 |
| 1 / somme des rangs | 0,059 | 0,065 | 0,100 |

**EXEMPLE 3**

**Addition de levure enrichie en glutathion en cours de fermentation**

1) - Mise en oeuvre

Trois fermentations sont réalisées selon le protocole décrit à l'exemple 1, à la différence que les levures SC1 et SC2 sont introduites dans les fermenteurs F1 et F2 en milieu de fermentation alcoolique. La moitié de la fermentation est réalisée lorsque la moitié du sucre présent initialement dans le jus de fruit a été consommée.

2) - Effet sur la cinétique fermentaire

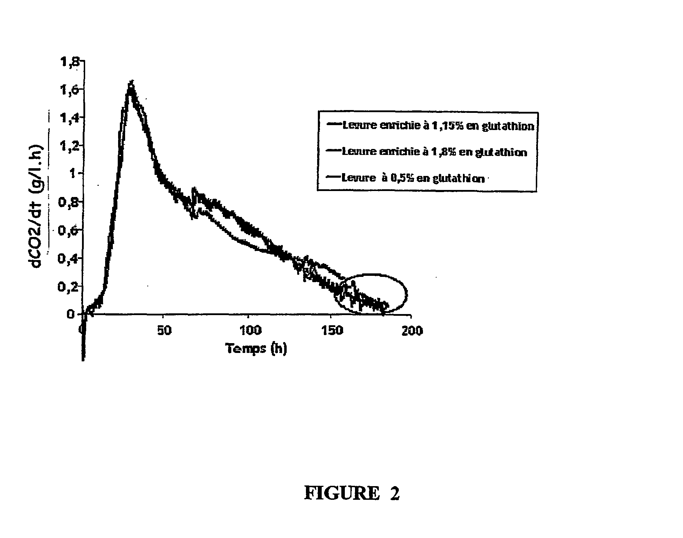

La cinétique fermentaire est suivie dans chaque fermenteur par mesure du $CO_2$ dégagé.
Les résultats sont présentés Figure 2. Ils montrent qu'un ajout en milieu de fermentation alcoolique de levure enrichie en glutathion n'influence pas de manière significative les performances fermentaires de la levure active inoculée.

**EXEMPLE 4**

**Modification du profil organoleptique, après traitement par une levure enrichie en glutathion en début de fermentation**

1)- Fermentations

Deux fermentations sont réalisées sur un moût de Chardonnay de Champagne dont les caractéristiques initiales sont les suivantes:

| | |
|---|---|
| pH | 3,07 |
| $SO_2$ total | 84 mg/l |
| $SO_2$ libre | 22 mg/l |
| Acide malique | > 3.4 g/l |
| Acidité totale | 7.45 g/l $H_2SO_4$ |
| Sucre | 137 g/l |
| Densité | 1062 |
| Acidité volatile | 0.02 g/l $H_2SO_4$ |
| Turbidité | 14.44 |
| N assimilable | 224.5 mg/l |

Après chaptalisation du moût à 12 %, la densité finale est 1087.5 et la concentration en sucre atteint 202 g/l
Les essais sont réalisés sur des fermenteurs de 1 litre, la levure ensemencée est la Vitilevure C® (Martin Vialatte, France), à la dose de 0,20 g/l. Lorsque la fermentation est lancée, la levure enrichie en glutathion SC2 est rajoutée dans un des fermenteurs à 0,30 g/l (soit 5,4 mg/l de glutathion ajouté).

2)- Cinétiques fermentaires

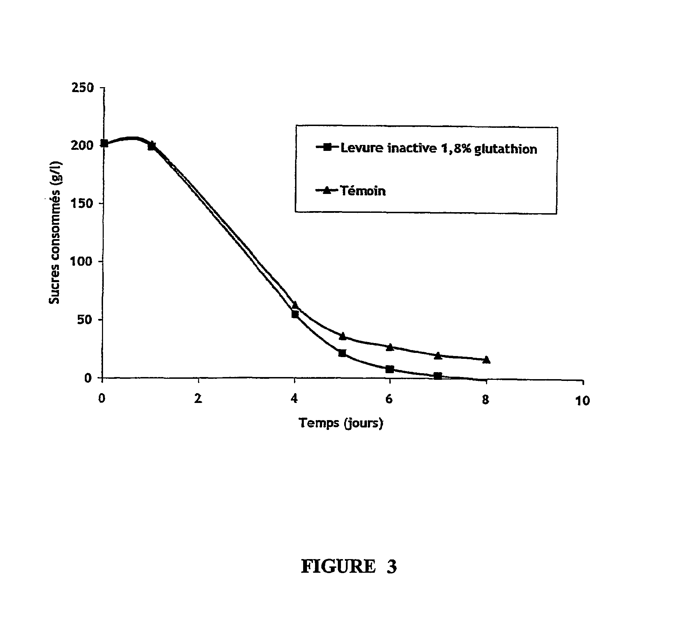

Les cinétiques fermentaires sont suivies pour vérifier le bon déroulement de la fermentation.
Les résultats obtenus (voir Figure 3) montrent qu'il n'y a pas d'effet néfaste sur les performances cinétiques, et qu'à l'inverse, un petit effet positif est observé, puisque le moût contenant la levure enrichie termine la fermentation plus rapidement.

3) - Tests organoleptiques

Les deux vins obtenus sont testés en dégustation par un panel de 15 personnes. Les résultats organoleptiques obtenus sont portés dans le tableau 2. Ils montrent que le vin traité avec les levures inactives riches en glutathion a été préféré avec une augmentation du volume en bouche et des arômes imités très marqués que dans le vin témoin.

TABLEAU 2

|  | Témoin | avec ajout de 0,30 g/l SC2 |
|---|---|---|
| Somme des rangs | 27 | 11 |
| 1 / somme des rangs | 0,037 | 0,091 |

## EXEMPLE 5

**Effet de l'apport de levure enrichie en glutathion sur la coloration du vin**

Deux fermentations alcooliques sont conduites en parallèle dans des fermenteurs Fo et F1, de 1,1 litre sur le moût de Chardonnay dont les caractéristiques sont données à l'exemple 4. Les fermenteurs Fo et F1 sont ensemencés par 0,25 g/l de levure sèche active (EC 1118[®], Lallemand, Canada), réhydratée selon la méthode standard (30 minutes dans de l'eau à 37°C). Cette levure contient naturellement 0,5% de glutathion.

Dans le fermenteur F1, on ajoute en début de fermentation 0,3 g/l de levure enrichie en glutathion à 1,8% SC2 (soit 5,4 mg/l de glutathion ajouté), préparée comme décrit à l'exemple 2. Lorsque la fermentation est terminée, le vin témoin Vo et le vin traité V1 sont filtrés, mis en bouteilles et conservés à 14°C en position couchée. Des mesures d'absorbance à 420 nm sont réalisées après différents laps de temps. Les résultats obtenus après deux mois sont présentés dans le tableau 3.

TABLEAU 3

| durée de conservation | 2 mois | 4 mois |
|---|---|---|
| Témoin Vo | 0,247 | 0,256 |
| Vin traité V1 | 0,215 | 0,190 |

On observe que dans le vin témoin la coloration s'accentue légèrement, alors que le vin traité par la levure enrichie présente une nette amélioration de sa teinte. Le traitement selon l'invention est donc efficace dès les premières semaines de conservation.

## Revendications

1. Procédé pour la prévention du vieillissement défectueux des vins blancs **caractérisé en ce que** lors de la préparation dudit vin, on introduit dans le moût de la levure préalablement enrichie en glutathion au début, pendant ou après l'étape de fermentation alcoolique.

2. Procédé selon la revendication 1 **caractérisé en ce que** ladite levure enrichie en glutathion contient plus de 0,5% de glutathion en poids rapporté au poids de matière sèche de la levure.

3. Procédé selon la revendication 1 **caractérisé en ce que** ladite levure enrichie en glutathion contient au moins 1% de glutathion, et de préférence au moins 1,5% de glutathion, en poids rapporté au poids de matière sèche de la levure,

4. Procédé selon l'une des revendications 1 à 3, **caractérisé en ce que** l'on introduit ladite levure enrichie en glutathion dans le moût à raison de 0,1 g à 1 g de matière sèche par litre de moût, de préférence à raison de 0,3 g/l à 0,7 g/l et encore de préférence à raison de 0,5 g/l.

5. Procédé selon l'une des revendications précédentes, **caractérisé en ce que** l'introduction dans le moût de ladite levure enrichie en glutathion réalise un apport d'au moins 3 mg de glutathion par litre de moût, de préférence au moins 5 mg et encore de préférence environ 9 mg de glutathion par litre de moût.

**6.** Procédé selon l'une quelconque des revendications précédentes, **caractérisé en ce que** ladite levure enrichie en glutathion est introduite dans le moût sous une ou plusieurs des formes suivantes ; levure sèche active, levure sèche inactivée.

**7.** Procédé selon l'une des revendications précédentes, **caractérisé en ce que** ladite levure enrichie en glutathion est au moins en partie constituée par la levure inoculée dans le moût pour réaliser la fermentation alcoolique.

**8.** Procédé selon l'une quelconque des revendications 1 à 7, **caractérisée par** l'apport de levures contenant naturellement du glutathion pour initier la fermentation alcoolique.

**9.** Procédé selon l'une quelconque des revendications 1 à 8, **caractérisée en ce que** ledit glutathion est libéré dans le vin postérieurement à la fermentation.

**10.** Utilisation du procédé selon l'une quelconque des revendications 1 à 9, pour apporter au moût au début, pendant ou après l'étape de fermentation alcoolique, du glutathion protégé par des cellules de levures.


**Claims**

**1.** A method for the prevention of defective ageing white wines, **characterized in that**, during the preparation of said wine, yeast previously enriched in glutathione is introduced into the must at the beginning of, during or after the alcoholic fermentation step.

**2.** The method as claimed in claim 1, **characterized in that** said glutathione-enriched yeast contains more than 0.5% of glutathione by weight relative to the weight of solids of the yeast.

**3.** The method as claimed in claim 1, **characterized in that** said glutathione-enriched yeast contains at least 1% of glutathione, and preferably at least 1.5% of glutathione, by weight relative to the weight of solids of the yeast.

**4.** The method as claimed in anyone of claims 1 to 3, **characterized in that** said glutathione-enriched yeast is introduced into the must in a proportion of 0.1 g to 1 g of solids per liter of must, preferably in a proportion of 0.3 g/l to 0.7 g/l, and more preferably in a proportion of 0.5 g/l.

**5.** The method as claimed in anyone of the preceding claims, **characterized in that** the introduction of said glutathione-enriched yeast into the must produces a provision of at least 3 mg of glutathione per liter of must, preferably at least 5 mg, and more preferably approximately 9 mg of glutathione per liter of must.

**6.** The method as claimed in anyone of the preceding claims, **characterized in that** said glutathione-enriched yeast is introduced into the must in one or more of the following forms: active dry yeast, inactive dry yeast.

**7.** The method as claimed in one of the preceding claims, **characterized in that** said glutathione-enriched yeast consists at least in part of the yeast inoculated into the must in order to carry out the alcoholic fermentation.

**8.** The method as claimed in anyone of claims 1 to 7,
**characterized by** addition of yeasts naturally containing glutathione to initiate the alcoholic fermentation.

**9.** The method of anyone of claims 1 to 8, **characterized in that** the glutathione is released in wine, after the fermentation.

**10.** Use of the method according to anyone of claims 1 to 9, to provide the must, at the beginning, during or after the alcoholic fermentation, with glutathione protected by the yeast cells.


**Patentansprüche**

**1.** Verfahren zur Verhinderung einer gestörten Alterung von Weißweinen, **dadurch gekennzeichnet, dass** bei der Herstellung des Weines dem Most zu Beginn, während oder nach der Phase der alkoholischen Gärung Hefe zugesetzt wird, welche vorab mit Glutathion angereichert wurde.

**2.** Verfahren nach Anspruch 1, **dadurch gekennzeichnet, dass** die mit Glutathion angereicherte Hefe mehr als 0,5 Gewichtsprozent Glutathion bezogen auf das Gewicht der Trockenmasse der Hefe enthält.

**3.** Verfahren nach Anspruch 1, **dadurch gekennzeichnet, dass** die mit Glutathion angereicherte Hefe mindestens 1 Gewichtsprozent Glutathion, vorzugsweise mindestens 1,5% Glutathion, bezogen auf das Gewicht der Trockenmasse der Hefe enthält.

**4.** Verfahren nach einem der Ansprüche 1 bis 3, **dadurch gekennzeichnet, dass** die mit Glutathion angereicherte Hefe dem Most in einer Menge von 0,1 g bis 1 g Trockenmasse pro Liter Most, vorzugsweise in einer Menge von 0,3 g/l bis 0,7 g/l und höchst bevorzugt in einer Menge von 0,5 g/l zugegeben wird.

**5.** Verfahren nach einem der vorhergehenden Ansprüche, **dadurch gekennzeichnet, dass** das Einbringen der mit Glutathion angereicherten Hefe in den Most zu einem Eintrag von mindestens 3 mg Glutathion pro Liter Most, vorzugsweise mindestens 5 mg und höchst bevorzugt von ungefähr 9 mg Glutathion pro Liter Most führt.

**6.** Verfahren nach einem der vorhergehenden Ansprüche, **dadurch gekennzeichnet, dass** die mit Glutathion angereicherte Hefe in den Most in einer oder mehreren der folgenden Formen eingebracht wird: aktive Trockenhefe, inaktivierte Trockenhefe.

**7.** Verfahren nach einem der vorhergehenden Ansprüche, **dadurch gekennzeichnet, dass** die mit Glutathion angereicherte Trockenhefe zumindest teilweise aus Hefe besteht, welche zum Bewirken der alkoholischen Gärung in den Most inokuliert wird.

**8.** Verfahren nach einem der Ansprüche 1 bis 7, **dadurch gekennzeichnet, dass** der Hefeeintrag natürlich Glutathion enthält, um die alkoholische Gärung einzuleiten.

**9.** Verfahren nach einem der Ansprüche 1 bis 8, **dadurch gekennzeichnet, dass** das Glutathion im Wein nach der Gärung freigesetzt wird.

**10.** Verwendung des Verfahrens nach einem der Ansprüche 1 bis 9, um zu Beginn, während oder nach der Phase der alkoholischen Gärung in den Most Glutathion einzubringen, das durch Hefezellen geschützt ist.

**FIGURE 1**

FIGURE 2

**FIGURE 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 6075500 A
- WO 9105846 A
- US 2003190388 A, Morris RA

**Littérature non-brevet citée dans la description**

- **FIALDES, E.** *Rev. des OEnologues,* 1989, vol. 54, 19-22
- **BARON, R. et al.** *Z. Lebensm. Unters Forsch,* 1997, vol. 205, 474-78
- **SIMS, C.A. et al.** *Am. J. Enol. Vitic,* 1995, vol. 46 (2), 155-158
- **BONILLA et al.** *J. Agric. Food Chem.,* 2001, vol. 49, 1928-1933
- *Vitic. Enol. Sci.,* 2000, vol. 55 (1), 29-32
- **PARK et al.** *Journal of the Korean Society of Agricultural Chemistry and Iotechnology,* 2003, vol. 46, 348-352
- **CATALINO et al.** Applied Microbiology and Biotechnology. Springer-Verlag, 1992, 141-146
- **ALFAFARA C. et al.** Appl. Microbiol. Biotechnol. Springer-Verlag, 1992, 141-146